# EUROPEAN PATENT SPECIFICATION

(11) **EP 1 316 226 B1**
(45) Date of publication and mention of the grant of the patent: **28.04.2004**
(21) Application number: 00960589.0
(22) Date of filing: 01.09.2000
(51) Int. Cl.: H04Q 3/00

(54) **METHOD FOR HANDLING SERVICE SCRIPTS IN A COMMUNICATION NETWORK**
VERFAHREN ZUR BEHANDLUNG VON DIENSTSCRIPTEN IN EINEM KOMMUNIKATIONSNETZ
PROCEDE D'ACHEMINEMENT DE SCRIPTS DE SERVICE DANS UN RESEAU DE COMMUNICATION

(43) Date of publication of application: 04.06.2003
(73) Proprietor: Nokia Corporation, 02150 Espoo (FI)
(72) Inventor: SYRJÄLÄ, Jari, FIN-01630 Vantaa (FI); JYLHÄ-OLLILA, Markku, FIN-00730 Helsinki (FI)
(74) Representative: Leson, Thomas Johannes Alois, Dipl.-Ing.
(86) International application number: PCT/EP2000/008589
(87) International publication number: WO 2002/019731

(56) References cited:
- WO-A-00/42760
- WO-A-97/35450
- ROSENBERG J ET AL: "PROGRAMMING INTERNET TELEPHONY SERVICES" IEEE NETWORK,IEEE INC. NEW YORK,US, vol. 13, no. 3, May 1999 (1999-05), pages 42-49, XP000870630 ISSN: 0890-8044

## Description

### FIELD OF THE INVENTION

The present invention relates to a method for handling sets of executable control data instructions in a communication network operated.

### BACKGROUND OF THE INVENTION

Throughout the subsequent specification, "sets of executable control data instructions" are also referred to as "scripts". Scripts are defined using a so-called script language.

An example can be found in WO 97 354 50.

For example, Call Processing Language (CPL) is such a script language that IETF has specified for call control purposes. (A "call" means a communication between a terminal equipment TE and a communication partner via a communication network.) Of course, the present invention is not limited to CPL as a script language, but is also applicable to the usage of other script languages. Nevertheless, for explanation purposes, reference is made herein below only to CPL scripts.

A script language can be used to create services like "call forwarding" etc. The CPL scripts as the chosen example scripts can be executed in the end system (terminal) or in the network server. Some of the scripts can only be run in the network, for example, scripts defining a kind of a service like "Call Forwarding on not reachable".

For the present invention, focus is laid on those scripts that are to be executed in the network servers. A network server is a functional element of and represents a node of a communication network.

The currently existing specifications of the script language CPL do not specify how the CPL scripts are transmitted in the network. A reason therefor may reside in the fact that the Internet Engineering Taskforce (IETF) has not specifically considered mobile communication networks when creating CPL.

Hence, CPL does not describe any mechanisms that can be used to optimize the storage and mobility of the scripts.

Nevertheless, due to the nature of mobile communication networks, the scripts defined for a respective user (subscriber) (i.e. for his terminal equipment) should be available in the user's location within the network in order to make sure that his services function correctly.

(Note that scripts defined for a user may be network originated scripts which were initially created by the network operator and were individually configured by the user, or may be terminal originated scripts which were created and configured by the user himself using his terminal equipment.)

One way to cope with this requirement would be that the user himself would manually send his scripts to the server (serving network functional element) whenever it is necessary.

However, such a procedure would impose an unnecessary burden on the user and could be felt as uncomfortable, since services for the user would not work properly or would not work at all if the user has forgotten to send his scripts to the serving network functional element. Also, this would require that the user is aware of the fact to which server within the communication network he would have to send his scripts.

### SUMMARY OF THE INVENTION

It is therefore an object of the present invention to provide an improved method for handling sets of executable control data instructions in a communication network, which method is free from the above drawbacks.

According to the present invention, the above object is, for example, achieved by a method for handling sets of executable control data instructions in a communication network operated, said network comprising at least one network functional element of a first type being imparted with a communication control functionality, the actual control functionality being determined by respective sets of said executable control data instructions which are temporarily storable in said functional element of a first type, with a terminal equipment being adapted to perform a communication via said communication network with a communication partner, said method comprising the steps of detecting that a registration condition for said terminal has occurred, and transferring at least one set of executable control data instructions allocated to said terminal to said at least one network functional element of a first type, via which the communication of said terminal equipment via said network is to be effected.

According to further technical solutions:
- said registration condition is the initial registration of the terminal equipment to said network, and said at least one set of executable control data instructions is transferred from said terminal equipment to said at least one network functional element of a first type;
- said network further comprises a network functional element of a second type being imparted with a database functionality, the database functionality providing a register of sets of said executable control data instructions for respective terminal equipments that have subscribed to the network, and said registration condition is the initial registration of the terminal equipment to said network, and said at least one set of executable control data instructions is transferred from said network functional element of a second type to said at least one network functional element of a first type;
- said registration condition is a handover of the terminal equipment from a first one of said at least one network functional element of a first type to a second one of said at least one network functional element, and said at least one set of executable control data instructions is transferred from said terminal equipment to said second one of said at least one network functional element of a first type;
- said registration condition is a handover of the terminal equipment from a first one of said at least one network functional element of a first type to a second one of said at least one network functional element, and said at least one set of executable control data instructions is transferred from said network functional element of a second type to said second one of said at least one network functional element of a first type;
- said terminal equipment is adapted to create user defined sets of executable control data instructions, and, upon activation of at least one of said created user defined sets of executable control data instructions, loading the at least one activated set to a first one of said at least one network functional element of a first type, via which the terminal equipment currently communicates via the network, and wherein said registration condition is a handover of the terminal equipment from said first one of said at least one network functional element of a first type to a second one of said at least one network functional element, and said at least one activated set of executable control data instructions is transferred from said first one of said at least one network functional element of a first type to said second one of said at least one network functional element of a first type.

Also, the present invention relates to a computer system comprising an execution environment for running an application for handling sets of executable control data instructions in a communication network, as set out in the above described method.

Still further, the present invention relates to a computer program product, loadable into the memory of a digital computer and comprising software code portions for performing the steps as set out in the above described method.

Advantageously, according to the present invention, the user's CPL scripts can automatically be made available for his usage. Consequently, the whole process of making the user's service scripts available for the concerned network functional element is transparent for the user.

The present invention is advantageously applicable in connection with IETF and 3GPP standards of communication networks.

### BRIEF DESCRIPTION OF THE DRAWINGS

The present invention and its features and advantages will become more fully apparent when referring to the detailed description of the accompanying drawing, in which

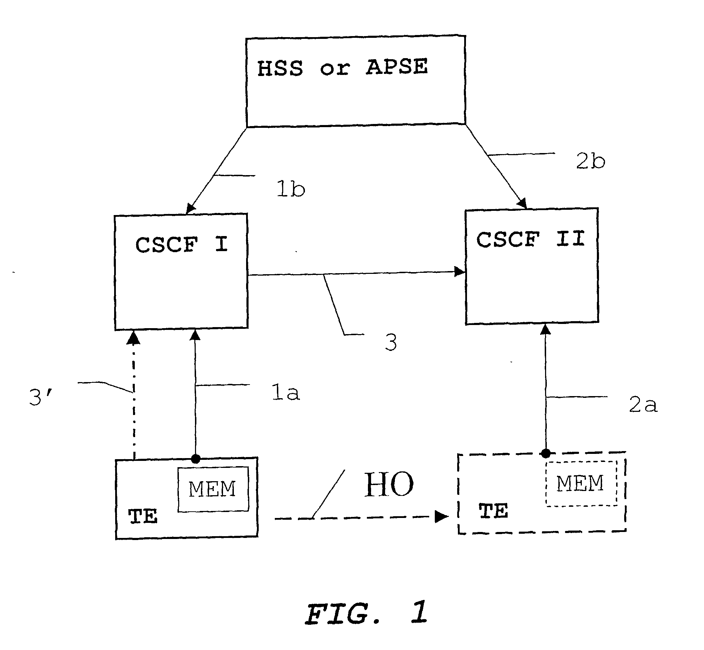

Fig. 1 illustrates a basic network architecture of an communication network according to the present invention (for example, and IP based network or a so-called all-IP network) adapted to the script handling scenarios according to the present invention.

### DETAILED DESCRIPTION OF THE DRAWING

Fig. 1 illustrates a basic network architecture of an communication network. It is however to be noted that in the drawing only those network functional elements are illustrated which are relevant for the present invention. Thus, so-called "last-step" access networks such as radio access networks (e.g. mobile communication network such as GPRS) establishing communication to and/from a terminal equipment are not shown in order to keep the drawing and explanation simple.

Fig. 1 shows network functional elements and their interconnections. However, it is to be noted that the arrows illustrating the interconnections do not represent the single possible data flow direction between the functional elements. Rather, the arrows merely denote the direction of the transfer of the sets of executable control data instructions (scripts) in connection with the present invention in specific situations to be described later.

As regards the network functional elements, two types of network functional elements have to be distinguished:
a first type being imparted with a communication control functionality, the actual control functionality being determined by respective sets of said executable control data instructions which are temporarily storable in said functional element of a first type, the first type being also referred to as call state control functional element CSCF, and
a second type being imparted with a database functionality, the database functionality providing a register of sets of said executable control data instructions for respective terminal equipments that have subscribed to the network, the second type being also referred to as home subscriber server HSS or as an application server APSE.

Within the call state control functional element CSCF a serving profile database SPD (not shown) is provided, which is adapted to store, at least temporarily, the scripts for a respective user. Nevertheless, in general, a database inside the CSCF which database stores the scripts, and which needs not be identical to a SPD, may be sufficient. Also, within the home subscriber server HSS (or the Application server APSE), a subscriber profile database (not shown) is provided, which is adapted to store scripts for a plurality of users having subscribed to the network.

A user of the communication network is represented as a terminal equipment TE (e.g. a wireless terminal). The terminal equipment is provided with a memory MEM at least for storing scripts for the corresponding user.

During operation (i.e. while a communication (call) is ongoing), or between two consecutive points of time at which the user switches on his terminal and thus initially registers to the network, the terminal equipment may move, or may have moved, respectively, within the network. The movement is assumed to be of such an amount that a new call state control function element CSCF II is responsible for serving the user.

Although Fig. 1 shows a situation in which CSCF I as well as CSCF II are in the same network, it is of course also possible that a terminal moves from one network to another network. That is, CSCF I could belong to another network than CSCF II.

Stated in other words, during movement a handover HO (representing a registration condition) occurs (indicated in dashed lines) from the initially responsible CSCF I to the newly responsible CSCF II. Or, after a relocation of a switched off terminal, which thereafter newly registers (i.e. initially registers after being switched on again) to the network, a new call state control functional element (CSCF II) is responsible for serving the user (at the time of switching off, a CSCF different from the CSCF II (e.g. CSCF I) was serving the terminal.

Generally spoken, a registration condition for the terminal in the IP network may be represented by an "initial registration" of the terminal (e.g. upon terminal activation and subsequent "attachment" of the terminal to the network) or by a handover of the terminal.

With reference to the basic network architecture as described above, the method for providing mobility of the CPL scripts in the network, i.e. the method for handling sets of executable control data instructions in the communication network will be described with reference to different situations referred to by the numerals of the arrows in Fig. 1.

### Situation option #1: - Registration -

### Situation 1a:

The terminal equipment TE of a subscriber to the network, which terminal is provided with its script memory MEM, newly (i.e. initially) registers to the network. Upon registration, a registration procedure is performed as the network needs to have a knowledge of the location of the subscriber in order to properly serve the subscriber. Then, the terminal TE sends at least one script from its memory MEM to the serving call state control functional element CSCF I.

Thus, upon detecting that a registration condition for said terminal TE has occurred (here: initial registration), at least one set of executable control data instructions allocated to said terminal is transferred to said at least one network functional element of a first type CSCF I, via which the communication of said terminal equipment via said network is to be effected.

### Situation 1b:

In this situation, the terminal TE need not necessarily be provided with an own memory MEM as in situation 1a. Rather, in situation 1b, it is assumed that scripts for the respective terminal are stored in the home subscriber server HSS (or APSE) and downloaded from the HSS (or APSE) upon detection of the initial registration of the terminal to the network as a registration condition.

Stated in other words, in this situation, said at least one set of executable control data instructions (script) is transferred from said network functional element of a second type HSS (or APSE) to said at least one network functional element of a first type CSCF I.

It should be noted that the above explanations similarly hold in case the terminal newly (i.e. initially) registers to the CSCF II.

### Situation option #2: - Handover (HO) -

The terminal TE is moving from the service region of the call state control functional element CSCF I to the service region of the call state control functional element CSCF II (indicated by the arrow labeled HO).

As mentioned above, although Fig. 1 shows a situation in which CSCF I as well as CSCF II are in the same network, it is of course also possible that a terminal moves from one network to another network. That is, CSCF I could belong to another network than CSCF II.

### Situation 2a:

Similar as in situation 1a, the terminal TE is provided with its own script memory MEM. Then, upon detection that a registration condition is fulfilled due to the handover procedure having to be performed, the terminal TE sends at least one script from its memory MEM to the call state control functional element CSCF II, to which the handover is performed.

Thus, as said registration condition is a handover of the terminal equipment TE from a first one CSCF I of said at least one network functional element of a first type to a second one of said at least one network functional element CSCF II, said at least one set of executable control data instructions is transferred from said terminal equipment to said second one CSCF II of said at least one network functional element of a first type.

### Situation 2b:

Similar as in situation 1b, the terminal TE need not necessarily be provided with an own memory MEM as in situation 1a, 2a. Rather, in situation 2b, it is assumed that scripts for the respective terminal are stored in the home subscriber server HSS (or the application server APSE) and downloaded, upon detection of the handover (as a registration condition) of the terminal from the initially serving call state control functional element CSCF I to the subsequently serving call state control functional element CSCF II, from the HSS (or the APSE) to the subsequently serving call state control functional element CSCF II.

Stated in other words, when said registration condition is a handover of the terminal equipment TE from a first one CSCF I of said at least one network functional element of a first type to a second one of said at least one network functional element CSCF II, said at least one set of executable control data instructions is transferred from said network functional element of a second type (HSS or APSE) to said second one CSCF II of said at least one network functional element of a first type.

### Situation option #3:

### - Handover (HO) in case the scripts are user created and were created during an ongoing communication -

When the user of the terminal TE creates his own scripts during an ongoing communication, he uploads the scripts to the serving call state control functional element CSCF I in order to be executed. This is illustrated by arrow 3'.

Those scripts are often only used during the individual ongoing communication and are therefore not permanently stored, neither the memory MEM (if any)of the terminal TE nor in the database at the home subscriber server or application server. (Nevertheless, such scripts may of course be stored for further use. In such a case, the handling methods as described in connection with situations 1 and/or 2 can be applied, depending on the storage location of the created scripts.)

Now, if a handover HO occurs from call state control functional element CSCF I to CSCF II, the scripts for the terminal are transferred from call state control functional element CSCF I to CSCF II (arrow 3).

Stated in other words, if said terminal equipment TE is adapted to create user defined sets of executable control data instructions, and upon activation of at least one of said created user defined sets of executable control data instructions (e.g. by the user), the at least one activated set is loaded to a first one CSCF I of said at least one network functional element of a first type, via which the terminal equipment currently communicates via the network, and if said registration condition is a handover of the terminal equipment TE from said first one CSCF I of said at least one network functional element of a first type to a second one of said at least one network functional element CSCF II, said at least one activated set of executable control data instructions is transferred from said first one CSCF I of said at least one network functional element of a first type to said second one CSCF II of said at least one network functional element of a first type.

In this connection, it should be noted that scripts which are stored in the memory MEM of the terminal TE or in the home subscriber server HSS (or in the application server APSE) and of which a temporary copy for execution purposes is loaded to a serving call state control functional element CSCF may also be transferred in an inter-CSCF script transfer upon detection of a registration condition for the terminal.

Thus, as has been described herein above, this invention basically describes three methods that can be used in the mobile communication networks, which enable that the user scripts are available for the user in the location where he has roamed to.
These are basically the options according to the present invention how the CPL script mobility could be implemented :
1. The terminal would always load the user's scripts to the server (CSCF) when registering. This would require the terminal to have a storage for the CPL scripts.
2. The main storage of CPL scripts is the home subscriber server HSS or the application server APSE. The user's scripts are then loaded from the HSS or the APSE to the server (CSCF) when user registers to it.
3. For example in case the user creates a new CPL script, he uploads it to the serving CSCF. When location and serving CSCF is changed, the CSCFs communicate and the new CSCF (CSCF II) gets the scripts from the old one (CSCF I).

This invention also relates to the general concept of service model. If the chosen service model is the one with registering always to the home network, the scripts themselves are naturally not loaded to a visited network. However, since several CSCFs are assumed to be present in the home network and the serving CSCF could be chosen according to various parameters, there must be some way to make the user's CPL scripts available in the current serving CSCF even when it can only be in the home network.

Accordingly, as has been described above, the present invention proposes a method for handling sets of executable control data instructions in a communication network, said network comprising at least one network functional element of a first type CSCF I, CSCF II being imparted with a communication control functionality, the actual control functionality being determined by respective sets of said executable control data instructions which are temporarily storable in said functional element of a first type, with a terminal equipment TE being adapted to perform a communication via said communication network with a communication partner, said method comprising the steps of detecting that a registration condition for said terminal has occurred, and transferring at least one set of executable control data instructions allocated to said terminal to said at least one network functional element of a first type CSCF I, CSCF II, via which the communication of said terminal equipment via said network is to be effected.

It should be understood that the above description and accompanying drawings are only intended to illustrate the present invention by way of example only. The preferred embodiments of the present invention may thus vary within the scope of the attached claims.

## Claims

1. A method for handling sets of executable control data instructions in a communication network,
said network comprising
at least one network functional element of a first type (**CSCF I, CSCF II**) being imparted with a communication control functionality, the actual control functionality being determined by respective sets of said executable control data instructions which are temporarily storable in said functional element of a first type,
with a terminal equipment (TE) being adapted to perform a communication via said communication network with a communication partner,
**said method comprising the steps of**
detecting that a registration condition for said terminal has occurred, and
transferring at least one set of executable control data instructions allocated to said terminal to said at least one network functional element of a first type (**CSCF I, CSCF II**), via which the communication of said terminal equipment via said network is to be effected,
wherein said at least one set of executable control data instructions is transferred to said at least one network functional element of a first type (**CSCF I, CSCF II**) for execution at said network functional element of a first type (**CSCF I, CSCF II**).

2. A method according to claim 1, wherein
said registration condition is the initial registration of the terminal equipment (**TE**) to said network, and
said at least one set of executable control data instructions is transferred from said terminal equipment to said at least one network functional element of a first type (**CSCF I, CSCF II**).

3. A method according to claim 1, wherein
said network further comprises a network functional element of a second type (**HSS, APSE**) being imparted with a database functionality, the database functionality providing a register of sets of said executable control data instructions for respective terminal equipments that have subscribed to the network, and
said registration condition is the initial registration of the terminal equipment (**TE**) to said network, and
said at least one set of executable control data instructions is transferred from said network functional element of a second type (**HSS, APSE**) to said at least one network functional element of a first type (**CSCF I, CSCF II**) .

4. A method according to claim 1, wherein
said registration condition is a handover of the terminal equipment (**TE**) from a first one (**CSCF I**) of said at least one network functional element of a first type to a second one of said at least one network functional element (**CSCF II**), and
said at least one set of executable control data instructions is transferred from said terminal equipment to said second one (**CSCF II**) of said at least one network functional element of a first type.

5. A method according to claim 1, wherein
said registration condition is a handover of the terminal equipment (**TE**) from a first one (**CSCF I**) of said at least one network functional element of a first type to a second one of said at least one network functional element (**CSCF II**), and
said at least one set of executable control data instructions is transferred from said network functional element of a second type (**HSS, APSE**) to said second one (**CSCF II**) of said at least one network functional element of a first type.

6. A method according to claim 1, wherein
said terminal equipment (**TE**) is adapted to create user defined sets of executable control data instructions, and,
upon activation of at least one of said created user defined sets of executable control data instructions, loading the at least one activated set to a first one (**CSCF I**) of said at least one network functional element of a first type, via which the terminal equipment currently communicates via the network, and wherein
said registration condition is a handover of the terminal equipment (**TE**) from said first one (**CSCF I**) of said at least one network functional element of a first type to a second one of said at least one network functional element (**CSCF II**), and
said at least one activated set of executable control data instructions is transferred from said first one (**CSCF I**) of said at least one network functional element of a first type to said second one (**CSCF II**) of said at least one network functional element of a first type.

7. A computer system comprising an execution environment for running an application for handling sets of executable control data instructions in a communication network, according to the steps of any of claims 1 to 6.

8. A computer program product, loadable into the memory of a digital computer and comprising software code portions for performing the steps of any of claims 1 to 6.

## Patentansprüche

1. Verfahren zum Verarbeiten von Mengen ausführbarer Steuerdatenanweisungen in einem Kommunikationsnetzwerk,
wobei das Netzwerk aufweist:
zumindest ein Netzwerkfunktionselement eines ersten Typs (**CSCF I, CSCF II**), das mit einer Kommunikationssteuerfunktionalität versehen ist, wobei die tatsächliche Steuerfunktionalität mittels jeweiliger Mengen der ausführbaren Steuerdatenanweisungen bestimmt wird, die in dem Funktionselement eines ersten Typs vorübergehend speicherbar sind,
wobei ein Endgerät (**TE**) zum Durchführen einer Kommunikation mit einem Kommunikationspartner über das Kommunikationsnetzwerk angepasst ist,
**wobei das Verfahren die Schritte aufweist:**
Erfassen, dass eine Registrierungsbedingung für das Endgerät eingetreten ist, und
Übermitteln zumindest einer Menge ausführbarer Steuerdatenanweisungen, die dem Endgerät zugewiesen sind, an das zumindest eine Netzwerkfunktionselement eines ersten Typs (**CSCF I, CSCF II**), über das die Kommunikation des Endgeräts über das Netzwerk zu bewerkstelligen ist,
wobei die zumindest eine Menge ausführbarer Steuerdatenanweisungen zur Ausführung am Netzwerkfunktionselement eines ersten Typs (**CSCF I, CSCF II**) an das zumindest eine Netzwerkfunktionselement eines ersten Typs (**CSCF I, CSCF II**) übermittelt wird.

2. Verfahren gemäß Anspruch 1, bei dem
die Registrierungsbedingung die anfängliche Registrierung des Endgeräts (**TE**) am Netzwerk ist, und
die zumindest eine Menge ausführbarer Steuerdatenanweisungen vom Endgerät an das zumindest eine Netzwerkfunktionselement eines ersten Typs (**CSCF I, CSCF II**) übermittelt wird.

3. Verfahren gemäß Anspruch 1, bei dem
das Netzwerk zusätzlich ein Netzwerkfunktionselement eines zweiten Typs (**HSS, APSE**) aufweist, das mit einer Datenbankfunktionalität versehen ist, wobei die Datenbankfunktionalität ein Register an Mengen der ausführbaren Steuerdatenanweisungen für jeweilige Endgeräte bereitstellt, die das Netzwerk abonniert haben, und
die Registrierungsbedingung die anfängliche Registrierung des Endgeräts (**TE**) am Netzwerk ist, und
die zumindest eine Menge ausführbarer Steuerdatenanweisungen vom Netzwerkfunktionselement eines zweiten Typs (**HSS, APSE**) an das zumindest eine Netzwerkfunktionselement eines ersten Typs (**CSCF I, CSCF II**) übermittelt wird.

4. Verfahren gemäß Anspruch 1, bei dem
die Registrierungsbedingung eine Weiterreichung des Endgeräts (**TE**) von einem ersten (**CSCF I**) des zumindest einen Netzwerkfunktionselements eines ersten Typs an ein zweites des zumindest einen Netzwerkfunktionselements (**CSCF II**) ist, und
die zumindest eine Menge ausführbarer Steuerdatenanweisungen vom Endgerät an das zweite (**CSCF II**) des zumindest einen Netzwerkfunktionselements eines ersten Typs übermittelt wird.

5. Verfahren gemäß Anspruch 1, bei dem
die Registrierungsbedingung eine Weiterreichung des Endgeräts (**TE**) von einem ersten (**CSCF I**) des zumindest einen Netzwerkfunktionselements eines ersten Typs an ein zweites des zumindest einen Netzwerkfunktionselements (**CSCF II**) ist, und
die zumindest eine Menge ausführbarer Steuerdatenanweisungen vom Netzwerkfunktionselement eines zweiten Typs (**HSS, APSE**) an das zweite (**CSCF II**) des zumindest einen Netzwerkfunktionselements eines ersten Typs übermittelt wird.

6. Verfahren gemäß Anspruch 1, bei dem
das Endgerät (**TE**) zum Erzeugen von teilnehmerdefinierten Mengen ausführbarer Steuerdatenanweisungen angepasst ist, und
nach Aktivierung von zumindest einer der erzeugten teilnehmerdefinierten Mengen ausführbarer Steuerdatenanweisungen ein Laden der zumindest einen aktivierten Menge an ein erstes (**CSCF I**) des zumindest einen Netzwerkfunktionselements eines ersten Typs erfolgt, über das das Endgerät momentan über das Netzwerk kommuniziert, und wobei
die Registrierungsbedingung eine Weiterreichung des Endgeräts (**TE**) von dem ersten (**CSCF I**) des zumindest einen Netzwerkfunktionselements eines ersten Typs an ein zweites des zumindest einen Netzwerkfunktionselements (**CSCF II**) ist, und
die zumindest eine aktivierte Menge ausführbarer Steuerdatenanweisungen von dem ersten (**CSCF I**) des zumindest einen Netzwerkfunktionselements eines ersten Typs an das zweite (**CSCF II**) des zumindest einen Netzwerkfunktionselements eines ersten Typs ist.

7. Computersystem mit einer Ausführungsumgebung zum Betreiben einer Anwendung zum Verarbeiten von Mengen ausführbarer Steuerdatenanweisungen in einem Kommunikationsnetzwerk gemäß den Schritten gemäß einem der Ansprüche 1 bis 6.

8. Computerprogrammprodukt, das in einen Speicher eines digitalen Computers ladbar ist und Softwarecodeteile zum Durchführen der Schritte gemäß einem der Ansprüche 1 bis 6 aufweist.

## Revendications

1. Procédé pour gérer des jeux d'instructions de données de contrôle exécutables dans un réseau de communication,
ledit réseau comprenant :
au moins un élément fonctionnel de réseau d'un premier type (CSCF I, CSCF II) qui reçoit une fonctionnalité de contrôle de communication, la fonctionnalité de contrôle réelle étant déterminée par des jeux respectifs desdites instructions de données de contrôle exécutables qui peuvent être mémorisées temporairement dans ledit élément fonctionnel d'un premier type,
un équipement terminal (TE) étant adapté pour effectuer une communication, par l'intermédiaire dudit réseau de communication, avec un partenaire de communication,
ledit procédé comprenant les étapes consistant à :
détecter qu'une condition d'enregistrement pour ledit terminal est apparue, et
transférer au moins un jeu d'instructions de données de contrôle exécutables allouées audit terminal vers ledit au moins un élément fonctionnel de réseau d'un premier type (CSCF I, CSCF II), par lequel la communication dudit équipement terminal par l'intermédiaire dudit réseau doit être effectuée,
dans lequel ledit au moins un jeu d'instructions de données de contrôle exécutables est transféré audit au moins un élément fonctionnel de réseau d'un premier type (CSCF I, CSCF II) pour exécution au niveau dudit élément fonctionnel de réseau d'un premier type (CSCF I, CSCF II).

2. Procédé selon la revendication 1, dans lequel :
ladite condition d'enregistrement est l'enregistrement initial de l'équipement terminal (TE) dans ledit réseau, et
ledit au moins un jeu d'instructions de données de contrôle exécutables est transféré dudit équipement terminal audit au moins un élément fonctionnel de réseau d'un premier type (CSCF I, CSCF II).

3. Procédé selon la revendication 1, dans lequel :
ledit réseau comprend, en outre, un élément fonctionnel de réseau d'un deuxième type (HSS, APSE) qui reçoit une fonctionnalité de base de données, la fonctionnalité de base de données fournissant un registre de jeux desdites instructions de données de contrôle exécutables pour des équipements terminaux respectifs qui sont abonnés au réseau, et
ladite condition d'enregistrement est l'enregistrement initial de l'équipement terminal (TE) dans ledit réseau, et
ledit au moins un jeu d'instructions de données de contrôle exécutables est transféré dudit élément fonctionnel de réseau d'un deuxième type (HSS, APSE) audit au moins un élément fonctionnel de réseau d'un premier type (CSCF I, CSCF II).

4. Procédé selon la revendication 1, dans lequel :
ladite condition d'enregistrement est un transfert intercellulaire de l'équipement terminal (TE) d'un premier (CSCF I) dudit au moins un élément fonctionnel de réseau d'un premier type à un deuxième dudit au moins un élément fonctionnel de réseau (CSCF II), et
ledit au moins un jeu d'instructions de données de contrôle exécutables est transféré dudit équipement terminal audit deuxième (CSCF II) dudit au moins un élément fonctionnel de réseau d'un premier type.

5. Procédé selon la revendication 1, dans lequel :
ladite condition d'enregistrement est un transfert intercellulaire de l'équipement terminal (TE) d'un premier (CSCF I) dudit au moins un élément fonctionnel de réseau d'un premier type à un deuxième dudit au moins un élément fonctionnel de réseau (CSCF II), et
ledit au moins un jeu d'instructions de données de contrôle exécutables est transféré dudit élément fonctionnel de réseau d'un deuxième type (HSS, APSE) audit deuxième (CSCF II) dudit au moins un élément fonctionnel de réseau d'un premier type.

6. Procédé selon la revendication 1, dans lequel :
ledit équipement terminal (TE) est adapté pour créer des jeux d'instructions de données de contrôle exécutables définis par l'utilisateur, et
lors de l'activation d'au moins l'un desdits jeux d'instructions de données de contrôle exécutables définis par l'utilisateur créés, ledit au moins un jeu activé est chargé dans un premier (CSCF I) dudit au moins un élément fonctionnel de réseau d'un premier type, par lequel l'équipement terminal communique actuellement par l'intermédiaire du réseau, et dans lequel :
ladite condition d'enregistrement est un transfert intercellulaire de l'équipement terminal (TE) dudit premier (CSCF I) dudit au moins un élément fonctionnel de réseau d'un premier type à un deuxième dudit au moins un élément fonctionnel de réseau (CSCF II), et
ledit au moins un jeu activé d'instructions de données de contrôle exécutables est transféré dudit premier (CSCF I) dudit au moins un élément fonctionnel de réseau d'un premier type audit deuxième (CSCF II) dudit au moins un élément fonctionnel de réseau d'un premier type.

7. Système informatique comprenant un environnement d'exécution pour exécuter une application pour gérer des jeux d'instructions de données de contrôle exécutables dans un réseau de communication, selon les étapes de l'une quelconque des revendications 1 à 6.

8. Produit-programme informatique, pouvant être chargé dans la mémoire d'un ordinateur numérique et comprenant des parties de code de logiciel pour effectuer les étapes de l'une quelconque des revendications 1 à 6.
